Europäisches Patentamt

European Patent Office

Office européen des brevets

(19)

(11) Numéro de publication : **0 327 476 B1**

## (12) FASCICULE DE BREVET EUROPEEN

(45) Date de publication du fascicule du brevet :
03.06.92 Bulletin 92/23

(21) Numéro de dépôt : **89420029.4**

(22) Date de dépôt : **01.02.89**

(51) Int. Cl.⁵ : **F16D 65/12,** F16D 65/847, F16D 55/24, B60T 1/06, B61H 5/00, F16D 55/228

(54) **Frein à disques pour arbre tournant.**

(30) Priorité : **02.02.88 FR 8801414**

(43) Date de publication de la demande :
**09.08.89 Bulletin 89/32**

(45) Mention de la délivrance du brevet :
**03.06.92 Bulletin 92/23**

(84) Etats contractants désignés :
**AT BE CH DE ES FR GB GR IT LI LU NL SE**

(56) Documents cités :
**EP-A- 0 171 164**
**FR-A- 1 189 381**
**FR-A- 2 359 321**
**FR-A- 2 392 280**
**FR-A- 2 557 240**

(73) Titulaire : **CARBONE INDUSTRIE, Société Anonyme**
**"Les Mercuriales" 40 rue Jean-Jaurès**
**F-93176 Bagnolet Cédex (FR)**

(72) Inventeur : **Wautelet, Yves**
**7, Allée des Erables**
**F-78290 Croissy sur Seine (FR)**
Inventeur : **Manin, Charles**
**604, Avenue du 8 mai 1945**
**F-69300 Caluire (FR)**

(74) Mandataire : **Ropital-Bonvarlet, Claude**
**Cabinet BEAU DE LOMENIE, 51, avenue Jean-Jaurès**
**F-69007 Lyon (FR)**

## Description

La présente invention concerne les freins du type à disques montés sur des arbres tournants pour dissiper l'énergie cinétique qu'ils possèdent lorsqu'il convient de freiner ou d'arrêter leur rotation.

La présente invention vise, plus spécifiquement, les freins à disques multiples ou du type puits de chaleur, par opposition aux freins à disques tournant dont les contreparties de freinage sont constituées par des secteurs ou des plaquettes ne recouvrant qu'une partie de la surface du disque tournant.

Les freins à disques multiples comprennent, généralement, au moins un disque rotor qui est porté par un moyeu solidaire en rotation de l'arbre tournant. De tels freins comportent, également, au moins une contrepartie statique portant au moins un disque stator qui est immobilisé angulairement pour être placé en vis-à-vis de l'une des faces du disque rotor. De tels freins comprennent, par ailleurs, un système de commande en déplacement du disque stator parallèlement à l'axe de l'arbre tournant en direction du disque rotor sur lequel il exerce une pression, en vue de freiner la rotation de ce dernier.

Généralement, un frein du type ci-dessus comporte un disque rotor constitué entièrement en métal, de part et d'autre duquel sont disposées des garnitures d'usure, en forme de disque ou portion de disque stator, réalisées en un matériau présentant un bon coefficient de frottement. Une telle structure est lourde et fait intervenir des masses non suspendues relativement importantes. Pour réduire cet inconvénient, il a été proposé, notamment par le brevet **FR 2 557 240 (83-20 496)**, de constituer le disque rotor au moyen d'une âme métallique sur les deux faces de laquelle sont rapportées des garnitures d'usure en un matériau à bon coefficient de frottement, par exemple, en carbone-carbone, comme le ou les disques stators.

Un frein du type ci-dessus est, généralement, capable de performances plus élevées qu'un frein ne possédant qu'un disque rotor en métal. Cependant, un tel frein s'avère limité en énergie à dissiper en raison de la structure du disque rotor.

En effet, l'âme métallique, par sa nature même, connaît une limite de montée en température lors d'un freinage. Cette limite peut être estimée voisine de 500° C. Or, les garnitures d'usure rapportées, notamment lorsqu'elles sont réalisées en carbone-carbone, possèdent une bonne efficacité à des températures plus élevées, de l'ordre de 1 300° C.

La limite d'absorption et de dissipation est donc conditionnée par les performances de l'âme métallique, alors que les garnitures d'usure rapportées possèdent des capacités nettement supérieures.

Dans le cas où les énergies devant être absorbées sont particulièrement élevées, il est alors nécessaire d'adapter, sur un arbre tournant, plusieurs freins du même type sur chacun desquels se répartit l'énergie devant être dissipée.

Une telle sujétion se traduit par un ensemble de freinage plus lourd, plus encombrant et plus cher que celui ne faisant intervenir qu'un seul frein à disque.

On pourrait penser qu'il suffit, pour résoudre le problème ci-dessus, de constituer les disques rotors et les disques stators, par exemple comme enseigné par la demande **EP-A-0 171 164** et en un matériau présentant un bon coefficient de frottement, par exemple en carbone-carbone. Une telle solution peut apparaître digne d'intérêt pour des applications dans lesquelles les arbres tournants sont démontables. Elles s'avèrent, toutefois, impossibles à mettre en oeuvre pratiquement lorsqu'au contraire les arbres tournants font partie de structures lourdes, complexes et indémontables qui sont, par ailleurs, celles pour lesquelles les niveaux d'énergie devant être dissipés sont les plus importants. A titre d'exemple, ceci est le cas des véhicules lourds, terrestres ou ferroviaires, transportant des charges importantes et se déplaçant à vitesse relativement élevée.

Dans un tel cas, la constitution des rotors et des stators en forme de disques annulaires, par exemple en carbone-carbone, ne peut être envisagée, en raison de l'impossibilité de pouvoir monter et démonter rapidement de tels disques chaque fois que le besoin se fait sentir de les changer.

Pour remédier a cet inconvénient, la technique antérieure connaît l'enseignement fourni par les brevets **FR-A-1 189 381** et **2 359 321 (77-22 829)** qui visent, justement, un tel problème. Selon ces brevets, le disque rotor et/ou stator est constitué d'une pluralité de secteurs réunis entre eux par des boulons. Cette disposition n'est pas envisageable avec les matériaux de friction thermostructurel, en raison des caractéristiques de résistances thermiques différentes entre le matériau des pièces d'usure et celui des pièces de liaison.

La présente invention vise à remédier aux inconvénients ci-dessus en proposant un nouveau système de frein à disques pour arbre tournant non démontable, un tel frein étant constitué à base de disques démontables en matériau de friction thermostructurel, par exemple en carbone-carbone, afin de conférer au système de frein ainsi conçu des capacités de résistance élevée lui permettant de supporter sans dommage des températures hautes, afin d'être à même de dissiper des énergies importantes.

Pour atteindre les objectifs ci-dessus, le frein à disques pour arbre tournant non démontable par rapport à une structure porteuse, du type à base de disques : (EP-A-171 164) comprenant au moins un disque rotor porté par l'arbre tournant et constitué par au moins deux couronnes, au moins un disque stator lié à la structure portant l'arbre, des moyens pour commander le déplacement axial positif du disque stator en direction du disque rotor, et des moyens de liaison angulaire prévus entre les disques et, soit l'arbre, soit une partie de la structure, est caractérisé en ce que l'arbre tournant est non démontable et le disque stator est également constitué par au moins deux couronnes, les couronnes du disque rotor et du disque stator étant en matériau de friction thermostructurel, l'une au moins des couronnes de chaque disque étant formée par au moins deux secteurs disposés dans un même plan et assemblés a l'autre couronne par des goupilles traversantes emmanchées serrées et réalisées en un même matériau que les secteurs.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique mettant en évidence la structure du système de frein selon l'invention.

La **fig. 2** est une perspective, en partie éclatée et partiellement arrachée, montrant, plus en détail, un élément constitutif de la structure du système de frein.

La **fig. 3** est une perspective illustrant, de façon semblable à la **fig. 2**, un autre élément constitutif de l'objet de l'invention.

La **fig. 4** est une perspective, en partie éclatée, montrant une variante de réalisation de l'élément selon la **fig. 2**.

La **fig. 5** est une coupe transversale illustrant, à plus grande échelle, un développement de l'un des éléments constitutifs de l'invention.

Les **fig. 6 et 7** sont des coupes-élévations schématiques montrant deux exemples d'application de l'objet de l'invention.

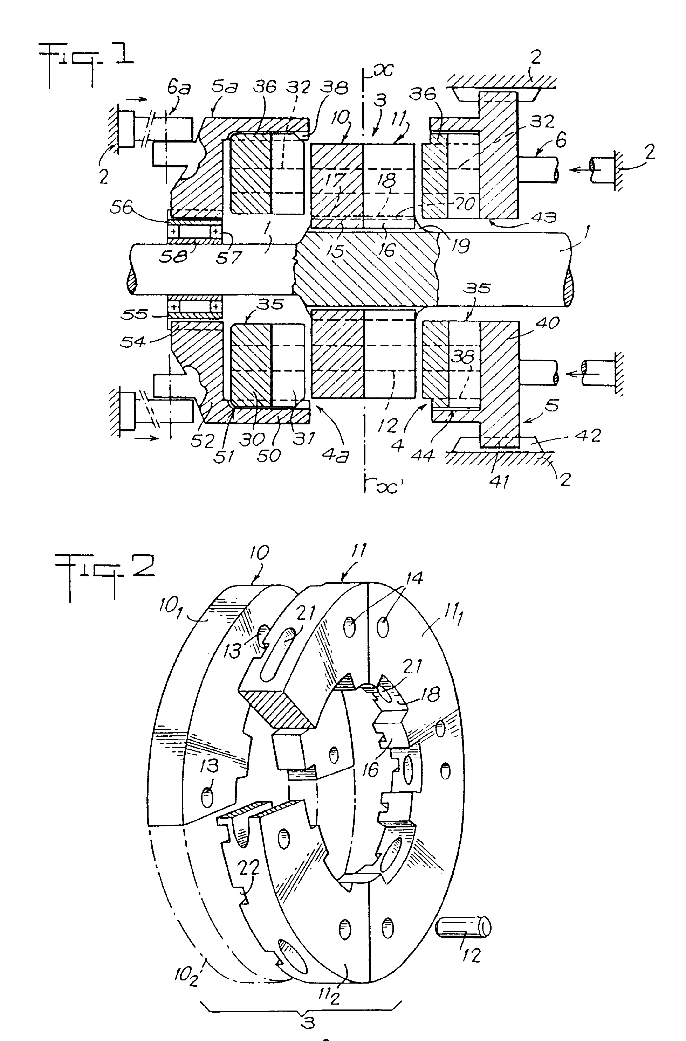

La **fig. 1** montre le système de frein selon l'invention mis en oeuvre pour contrôler la rotation d'un arbre tournant **1**, non démontable facilement et porté par une structure **2** au moyen de paliers non représentés, suspendus ou non.

Le système de frein comporte un disque rotor **3** lié en rotation à l'arbre **1** et au moins un disque stator **4** ou **4a** porté par un support statique **5** ou **5a** relié à la structure **2** par un dispositif **6-6a** de reprise de couple et de commande en déplacement axial en direction du rotor **3**. Le qualificatif de disque doit être compris dans son acception habituelle dans le domaine technique concerné et se rapporte à des éléments en forme de flasque annulaire plutôt qu'à des disques au sens géométrique pur.

Il doit être considéré que le système de frein selon l'invention peut comporter un disque rotor **3** associé à un disque stator **4** ou **4a** ou de part et d'autre duquel sont disposés deux disques stators identiques, tels que **4** ou **4a**.

Les réalisations des stators **4** et **4a** illustrées à la **fig. 1**, sont données pour fournir deux exemples d'exécution d'un même élément constitutif et, pour cette raison, sont représentées de part et d'autre de l'axe de symétrie transversal **x-x'** passant par le disque rotor **3**. Les exemples de réalisation selon les représentations **4** et **4a** font l'objet d'une description spécifique pour les parties constitutives qui diffèrent de l'une à l'autre.

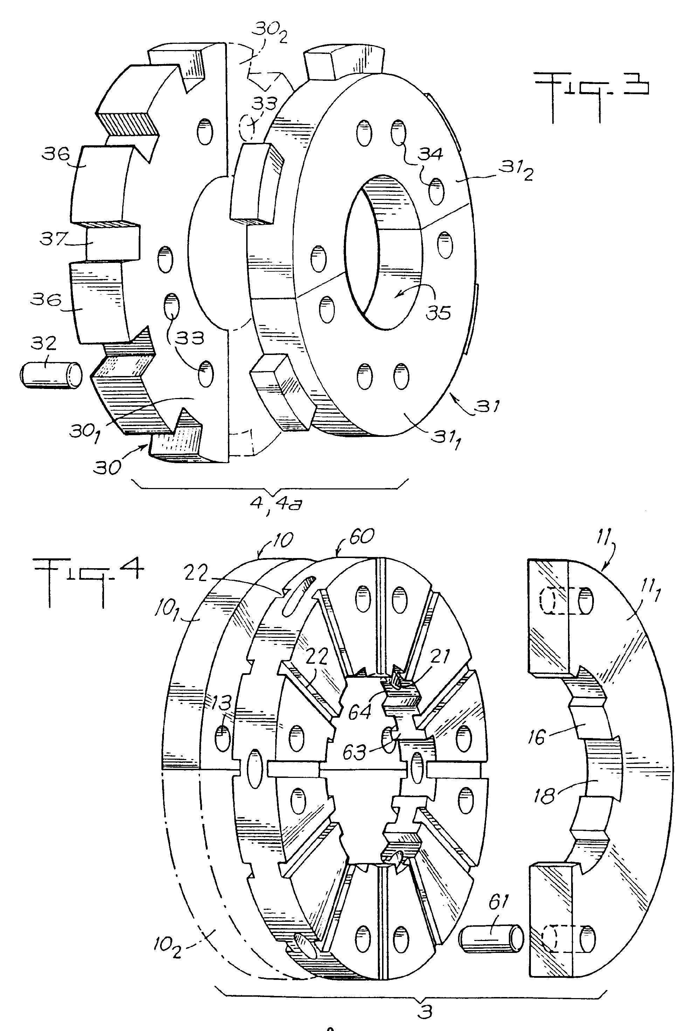

Dans l'exemple de réalisation selon les **fig. 1** et **2**, le disque rotor **3** est constitué par deux couronnes annulaires **10** et **11** qui sont, chacune, constituées par au moins deux secteurs de couronnes $10_1$, $10_2$ et $11_1$, $11_2$. Les secteurs constitutifs de chaque couronne sont placés dans un même plan et les deux couronnes sont disposées côte à côte. Par ailleurs, les secteurs $10_1$, $10_2$ sont décalés angulairement par rapport au secteur $11_1$, $11_2$, ou inversement, d'une mesure angulaire correspondant à la moitié de l'angle au centre couvert par chaque secteur. De préférence, les secteurs de chaque couronne possèdent une même plage angulaire identique d'une couronne à l'autre.

Les différents secteurs constitutifs des couronnes sont, par ailleurs, assemblés entre eux, de manière que les couronnes **10** et **11** soient jointives par leurs faces en regard. L'assemblage est réalisé par l'intermédiaire de moyens de liaison, tels que des goupilles **12** qui sont emmanchées serrées dans des trous **13** et **14** pratiqués, respectivement, dans les secteurs $10_1$, $10_2$ et $11_1$, $11_2$.

Dans une réalisation préférée selon l'invention, les secteurs $10_1$, $10_2$ et $11_1$, $11_2$ sont réalisés en un matériau à coefficient de frottement élevé, de préférence en un matériau thermostructurel et, par exemple, en carbone-carbone. Les goupilles **12** sont réalisées en un même matériau pour éviter les dilatations différentielles et pour que l'emmanchement serré permette d'obtenir, par matage, une liaison intime entre les goupilles et les secteurs. L'emmanchement serré des goupilles **12** peut, par exemple, être effectué avec une tolérance $H_7$-$p_6$, mais un serrage plus important peut aussi être envisagé.

Le mode de réalisation ci-dessus permet de constituer un disque rotor **3** sur un arbre **1** non démontable, étant donné que la forme structurelle en disque est obtenue par assemblage de secteurs de couronnes décalés relativement dans deux plans. Dans l'exemple illustré, chaque couronne est formée par deux secteurs. Un nombre différent pourrait être retenu.

Il doit être considéré qu'une variante pourrait consister à adapter sur l'arbre une première couronne en une seule pièce et à rapporter, sur la face dirigée vers le disque stator **4**, la seconde couronne formant garniture d'usure et constituée par au moins deux secteurs assemblés par des goupilles notamment

Ainsi que cela est précisé ci-avant, le disque rotor **3** est lié angulairement à l'arbre **2**. Un mode de liaison pouvant intervenir est celui représenté aux **fig. 1** et **2** montrant que les secteurs $10_1$, $10_2$ et $11_1$, $11_2$ possèdent, sur leur bord périphérique interne, des dents **15** et **16** laissant subsister entre elles des encoches **17** et **18**. Les dents et les encoches sont prévues pour coopérer avec des cannelures **19** formées par l'arbre **1**. Bien que cela ne soit pas représenté, des anneaux peuvent être rapportés sur l'arbre **1** de part et d'autre des couronnes constitutives du disque **3** pour assurer l'immobilisation axiale de ce dernier.

Dans une forme de réalisation préférée, les encoches **18** possèdent une profondeur radiale supérieure à la hauteur des cannelures **19**, de manière à laisser subsister des passages **20** axiaux permettant une circulation de fluide de ventilation. Une telle circulation peut, par exemple, résulter de l'entraînement en rotation de l'arbre **1**. Pour améliorer une telle fonction, il peut être prévu de délimiter, dans le disque **3**, des canaux radiaux **21** ménagés dans l'épaisseur des secteurs pour déboucher dans les encoches **17**, **18**, ainsi qu'à la périphérie extérieure ou, encore, des rainures radiales **22** pratiquées dans les faces en regard des secteurs assemblés.

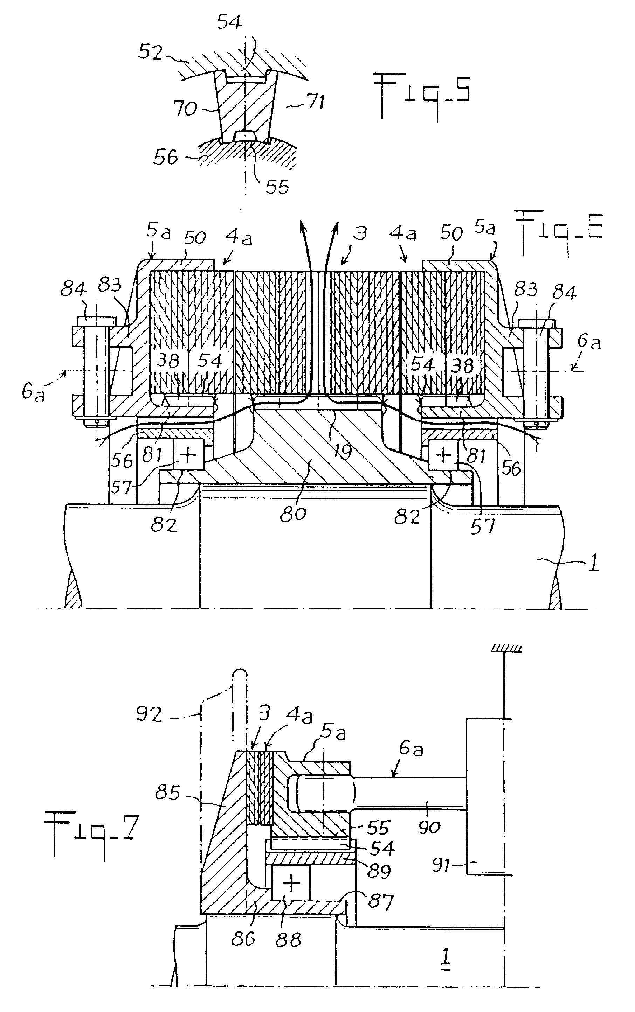

Le disque stator **4** ou **4a** est réalisé de semblable manière, tel que cela est illustré par la **fig. 3**. Chaque disque stator comprend, ainsi, deux couronnes annulaires **30** et **31**, respectivement constituées par deux secteurs de couronnes $30_1$ et $30_2$, d'une part, et $31_1$ et $31_2$, d'autre part. Ces secteurs sont placés dans un même plan pour chaque couronne en étant décalés angulairement d'une couronne à l'autre comme il a été dit précédemment. La liaison des secteurs est établie par des moyens de liaison et, notamment, par des goupilles **32** qui sont emmanchées serrées dans des trous **33** et **34** pratiqués dans les secteurs $30_1$, $30_2$ et $31_1$, $31_2$.

Comme dit précédemment, les couronnes **30** et **31** peuvent aussi être réalisées à partir d'un plus grand nombre de secteurs présentant toutes une même plage angulaire. Il peut aussi être prévu de réaliser chaque disque stator à partir d'une couronne d'une seule pièce adaptée sur le support **5** et de rapporter, sur la face orientée vers le disque rotor **3**, la seconde couronne formant garniture d'usure et constituée par des secteurs, de préférence fixés par les goupilles **32**.

Bien que cela ne soit pas représenté, des moyens de ventilation et de refroidissement, tels que les canaux **21** et les rainures **22**, peuvent, également, être prévus pour chaque disque stator.

Les disques stators **4** et **4a** sont aussi, de préférence, réalisés en un matériau thermostructurel et, plus particulièrement, en carbone-carbone.

Les disques stators **4-4a** sont portés par les supports **5-5a**, de manière à être enfilés avec jeu par leur ouverture centrale **35** sur l'arbre **1**.

Les moyens de liaison entre chaque disque stator et son support **5** ou **5a** sont constitués par des dents **36** formées à la périphérie intérieure ou extérieure des secteurs de couronnes pour ménager entre elles des encoches **37**, en vue de coopérer avec des cannelures **38** présentées par les supports **5** ou **5a**.

Dans l'exemple de réalisation selon la **fig. 1**, le support **5** est constitué par un flasque annulaire **40** formant, à sa périphérie extérieure, des rainures **41** coopérant avec des guides **42** présentés par la structure **2**. Le flasque **40** est ainsi libre de déplacement axial en étant lié angulairement à la structure **2** par rapport à l'arbre **1** sur lequel il est enfilé avec jeu par son ouverture centrale **43**. Le flasque **40** comporte, à partir de sa face orientée vers le disque rotor **3**, un logement **44**, de forme cylindrique, dont la périphérie intérieure porte les cannelures **38**. Le disque stator **4** est emboîté dans le logement **44** pour y être maintenu angulairement par la coopération entre les dents **36** et encoches **37** avec les cannelures **38**.

Le flasque **40** est pourvu, sur sa face opposée au logement **44**, de moyens de liaison avec le dispositif **6** qui peut être de toute nature convenable en étant constitué par un actionneur, notamment du type hydraulique à piston.

Le disque stator **4a** est monté de semblable manière dans une partie en cloche **50** présentée par le support **5a**. La partie en cloche **50** délimite un logement **51** de forme générale cylindrique dont le bord périphérique interne porte les cannelures **38**. La partie **50** possède, dans son voile **52**, une ouverture **53** pourvue de cannelures **54** coopérant avec des cannelures complémentaires **55** présentées par une bague **56** qui est montée, par l'intermédiaire de roulements **57**, sur une frette **58** rapportée sur l'arbre **1**. La partie en cloche **50** est reliée à la structure **2** par le dispositif **6a**, par exemple de même type que le dispositif **6**. Le montage du support **5a** permet un déplacement axial relatif par rapport à la bague **56** vis-à-vis de laquelle la rotation de l'arbre est entretenue par l'intermédiaire des roulements **57**. La profondeur des cannelures **54** est supérieure à la hauteur des cannelures **56**, de manière à laisser subsister un jeu favorable à une circulation d'air selon une direction axiale.

Le système de frein décrit ci-dessus, comportant un disque rotor et au moins un disque stator, que ce dernier soit du type **4** ou **4a** permet de disposer de moyens de freinage et de dissipation de l'énergie cinétique et thermique en faisant intervenir des disques en un matériau à coefficient de frottement élevé, pouvant être aisément montés et démontés par rapport à l'arbre **1** non démontable. Il devient ainsi possible de disposer de freins efficaces sur des structures en rotation pour lesquelles, ordinairement, il est habituel de recourir à des montages hybrides faisant intervenir des garnitures d'usure adaptées sur des structures porteuses métalliques possédant des limites d'exploitation, notamment en température, inférieures à celles des pièces d'usure.

Une variante de réalisation est représentée à la **fig. 4** selon laquelle le disque rotor **3** comporte deux couronnes **10** et **11** qui sont constituées comme dit précédemment en étant, toutefois, rapportées de part et d'autre d'une âme centrale **60** également réalisée en un matériau thermostructurel. Dans un tel cas, les conduits **21** et/ou les rainures **22** sont avantageusement présentés par l'âme centrale **60** sur laquelle les secteurs **10₁, 10₂** et **11₁, 11₂** sont rapportés par l'intermédiaire de goupilles traversantes **61** emmanchées à force à travers eux, ainsi que dans des trous **62** ménagés dans l'âme **60**.

Il est avantageux, aussi, dans un tel cas que la périphérie interne de la couronne **60** soit pourvue de dents **63** et d'encoches **64** pour coopérer avec les cannelures **19**.

La **fig. 5** montre que la liaison angulaire entre la bague **56** et le voile **52**, que ce dernier soit réalisé selon la **fig. 2** ou selon la **fig. 4**, peut faire intervenir l'interposition de clavettes **70** coopérant respectivement avec les cannelures **54** et **55**. Ces clavettes **70** permettent de ménager entre le bord périphérique interne du support **5** et de la bague **56**, un intervalle **71** favorable à une ventilation axiale et à une circulation d'air à même d'assurer un refroidissement efficace du système de frein constitué sous la forme structurelle d'un puits de chaleur.

La **fig. 6** montre un exemple plus pratique de réalisation d'un système de frein, puits de chaleur, comprenant, sur un arbre **1** non démontable, un disque rotor **3** et deux disques stator **4a**. Dans cet exemple, le disque rotor **3** est du type de la **fig. 4** et se trouve monté sur les cannelures **19** qui sont formées par une frette **80** rapportée sur l'arbre **1**. Les disques stators sont montés dans des supports **5a** dans lesquels ils sont immobilisés angulairement par des cannelures **54** ménagées à la périphérie interne pour coopérer avec les cannelures **38** qui sont aussi prévues à partir d'un rebord interne **81** de chaque support **5a**. La frette **80** délimite, à ses deux parties terminales, deux portées **82** pour le montage des roulements **57** supportant les bagues **56**. Chaque support **5a** est pourvu d'un étrier **83** pour la liaison par un axe **84** avec le dispositif **6a**.

La **fig. 7** montre un exemple d'application selon lequel le disque rotor **3**, réalisé comme dit précédemment en relation avec la **fig. 2** ou avec la **fig. 4**, est porté par un plateau **85** formé par une frette **86** rapportée sur l'arbre **1**. Dans un tel mode de réalisation, la frette **86** forme également, par sa périphérie, une portée **87** de centrage d'un ou plusieurs roulements **88**, supportant une bague **89**, du type de la bague **56**, permettant le montage d'un support **5a** portant un disque stator **4a**. Comme précédemment, le support **5a** est relié à un dispositif **6a** de reprise de couple et de commande en déplacement axial formé, par exemple, par une bielle **90** constituant la tige de piston d'un vérin hydraulique **91**.

Le plateau **85** peut, éventuellement, comme cela est schématisé en traits mixtes, constituer le voile d'une roue **92**, par exemple d'un véhicule ferroviaire. Dans un tel cas, il peut être envisagé de mettre en oeuvre un vérin **91** à double tige, de façon à commander simultanément deux systèmes de freins agissant en même temps sur les deux roues **92** d'un même arbre **1** constituant un essieu porteur.

## Revendications

1. Système de frein adaptable sur un arbre tournant (**1**) par rapport à une structure porteuse (**2**), du type à base de disques comprenant au moins un disque rotor (**3**) porté par l'arbre tournant (**1**) et constitué par au moins deux couronnes (**10, 11**), au moins un disque stator (**4**) lié à la structure (**2**) portant l'arbre (**1**), des moyens (**6**) pour commander le déplacement axial positif du disque stator (**4**) en direction du disque rotor (**3**), et des moyens de liaison angulaire prévus entre les disques et, soit l'arbre (**1**), soit une partie de la structure (**2**).

caractérisé en ce que l'arbre tournant (**1**) est non démontable et le disque stator (**4**) est également constitué par au moins deux couronnes (**30, 31**), les couronnes (**10, 11, 30, 31**) du disque rotor (**3**) et du disque stator (**4**) étant en matériau de friction thermostructurel, l'une au moins des couronnes (**10, 11, 30, 31**) de chaque disque (**3, 4**) étant formée par au moins deux secteurs (**10₁, 10₂ - 11₁, 11₂ - 30₁, 30₂ - 31₁, 31₂**) disposés dans un même plan et assemblés à l'autre couronne par des goupilles traversantes (**12, 32**) emmanchées serrées et réalisées en un même matériau que les secteurs.

2. Système de frein à disques selon la revendication 1, caractérisé en ce que les deux disques (**3,4**) sont respectivement constitués par au moins deux couronnes (**10, 11** et **30, 31**), en matériau de friction, formées chacune par au moins deux secteurs (**10₁, 10₂ - 11₁, 11₂ - 30₁, 30₂ - 31₁, 31₂**) disposés dans un même plan pour chaque couronne en étant décalés angulairement d'une couronne à l'autre, les secteurs des deux couronnes étant assemblés relativement par des goupilles traversantes (**12, 32**) emmanchées serrées et réalisées en un même matériau que les secteurs, et des moyens de liaison angulaire étant prévus entre les disques et, soit l'arbre, soit une partie de la structure.

3. Système de frein à disques selon la revendication 1 ou 2, caractérisé en ce que les moyens de liaison angulaire consistent en des dents (**15, 16, 36** et **41**) prévues sur l'un au moins des bords périphériques et coopérant avec des cannelures (**19, 38** et **42**)), soit de l'arbre, soit d'une partie de la structure.

4. Système de frein à disques selon la revendication 1 ou 2, caractérisé en ce que au moins le disque rotor (**3**) comprend une âme (**60**) solidaire angulairement de l'arbre tournant et pourvue, sur chacune de ses faces, d'une couronne (**10, 11**) en matériau de friction.

5. Système de frein à disques selon l'une des revendications 1, 2 ou 4, caractérisé en ce que au moins le disque rotor (**3**) comporte des canaux radiaux (**21, 22**) de ventilation.

6. Système de frein à disques selon la revendication 5, caractérisé en ce que les canaux radiaux de ventilation (**22**) sont délimités par les faces en regard des secteurs de couronnes.

7. Système de frein à disques selon la revendication 5, caractérisé en ce que les canaux radiaux de ventilation (**21**) sont ménagés dans l'âme.

8. Système de frein à disques selon la revendication 1 ou 2, caractérisé en ce que le disque stator (**4**) est adapté sur un support (**5**) monté coulissant axialement par rapport à l'arbre tournant (**1**) et associé à un dispositif (**6**) de reprise de couple et de commande en déplacement rectiligne en direction du disque rotor.

9. Système de frein à disques selon la revendication 8, caractérisé en ce que le support (**5**) est porté par la structure (**2**).

10. Système de frein à disques selon la revendication 8, caractérisé en ce que le support (**5**) est lié angulairement et monté coulissant axialement sur une bague cannelée (**56**) portée, au moyen de roulements (**57**), par une frette (**58, 80, 86**) rapportée sur l'arbre.

11. Système de frein à disques selon la revendication 10, caractérisé en ce que le support (**5**) est monté coulissant sur la bague (**56**) avec interposition de clavettes (**70**) délimitant des passages axiaux (**71**).

12. Système de frein à disques selon la revendication 1, caractérisé en ce que le disque rotor (**3**) est adapté sur un plateau (**85**) solidaire en rotation de l'arbre (**1**).

13. Système de frein à disques selon la revendication 12, caractérisé en ce que le plateau (**85**) est formé par le voile d'une roue (**92**) entraînée en rotation par l'arbre.

14. Système de frein à disques selon la revendication 12, caractérisé en ce que le plateau (**85**) est formé par une frette (**86**) rapportée sur l'arbre.

**Claims**

1. Braking system adaptable on a rotary shaft (1) which rotates with respect to a carrying structure (2), of the type based on disks comprising at least one rotor disk (3) carried by the rotary shaft (1) and constituted by at least two rings (10, 11), at least one stator disk (4) coupled to the structure (2) carrying the shaft (1), means (6) for controlling the axial positive displacement of the stator disk (4) in the direction of the rotor disk (1), and angular connection means provided between the disks and, either the shaft (1) or part of the structure (2), characterized in that the rotary shaft (1) is non-dismountable and the stator disk (4) is also constituted by at least two rings (30, 31), the rings (10, 11, 30, 31) of the rotor disk (4) being in thermostructural friction material, one at least of the rings (10, 11, 30, 31) of each disk (3, 4) being formed by at least two sectors ($10_1$, $10_2$ - $11_1$, $11_2$ - $30_1$, $30_2$ - $31_1$, $31_2$) situated inside the same plane and assembled to the other ring by means of tightly fitted traversing pins (12, 32) in the same material as the sectors.

2. Disc brake system according to claim 1, characterized in that the two disks (3, 4) are respectively constituted by at least two rings (10, 11 and 30, 31) in friction material, each ring being formed by at least two sectors ($10_1$, $10_2$ - $11_1$, $11_2$ - $30_1$, $30_2$ - $31_1$, $31_2$) situated in the same plane for each ring, but being angularly offset from one ring to the other, the sectors of the two rings being assembled by relatively tightly fitted traversing pins (12, 32) produced in the same material as the sectors, and angular connection means being provided between the discs and, either the shaft or one part of the structure.

3. Disc brake system according to claim 1 or 2, characterized in that the angular connection means consist in teeth (15, 16, 36 and 41) provided on at least one of the peripheral edges and cooperating with splines (19, 38 and 42) either in the shaft or in one part of the structure.

4. Disc brake system according to claim 1 or 2, characterized in that at least the rotor disk (3) comprises a core (60) angularly coupled to the rotary shaft and provided, on each one of its faces, with a ring (10, 11) of friction material.

5. Disc brake system according to one of claims 1, 2 or 4, characterized in that at least the rotor disk (3) comprises radial ventilation channels (21, 22).

6. Disc brake system according to claim 5, characterized in that the radial ventilation channels (22) are defined by the opposite faces of the ring sectors.

7. Disc brake system according to claim 5, characterized in that the radial ventilation channels (21) are provided in the core.

8. Disc brake system according to claim 1 or 2, characterized in that the stator disk (4) is adapted on a support (5) mounted for sliding axially with respect to the rotary shaft (1) and operationally coupled to a device (6) controlling the torque recovery and rectilinear displacement in the direction of the rotor disk.

9. Disc brake system according to claim 8, characterized in that the support (5) is carried by the structure (2).

10. Disc brake system according to claim 8, characterized in that the support (5) is coupled angularly to and mounted for sliding axially on a splined ring (56) carried, by means of rolling bearings (57), by a ferrule (58, 80, 86) built onto the shaft.

11. Disc brake system according to claim 10, characterized in that the support (5) is mounted for sliding on the ring (56) with insertion of keys (70) defining axial passages (71).

12. Disc brake system according to claim 1, characterized in that the rotor disk (3) is adapted on a plate (85) fast in rotation with the shaft (1).

13. Disc brake system according to claim 12, characterized in that the plate (85) is formed by the disk of a wheel (92) driven in rotation by the shaft.

14. Disc brake system according to claim 12, characterized in that the plate (85) is formed by a ferrule (86) built onto the shaft.


**Patentansprüche**

1. Bremssystem, das auf einer drehenden Welle (1) bezüglich einer Tragstruktur (2) anbringbar ist, von der Art aufgebaut auf Scheiben basierend, mit wenigstens einer Rotorscheibe (3), die von der drehenden Welle (1) getragen wird, und gebildet ist aus wenigstens zwei Kränzen (10, 11), wenigstens einer Statorscheibe (4), die mit der Struktur (2), die die Welle (1) trägt, verbunden ist, Einrichtungen (6) zum Steuern der axialen positiven Bewegung der Statorscheibe (4) in Richtung der Rotorscheibe (3), und mit Winkelverbindungseinrichtungen, die zwischen den Scheiben und entweder der Welle (1) oder einem Bereich der Struktur (2) vorgesehen sind,
dadurch gekennzeichnet, daß die drehende Welle (1) nicht entfernbar ist, und die Statorscheibe (4) ebenfalls aus wenigstens zwei Kränzen (30, 31) gebildet ist, wobei die Kränze (10, 11, 30, 31) der Rotorscheibe (3) und der Statorscheibe (4) aus einem hitzebeständigen Reibmaterial gebildet sind, wobei wenigstens einer der Kränze (10, 11, 30, 31) einer jeden Scheibe (3, 4) durch wenigstens zwei Sektoren ($10_1$, $10_2$ - $11_1$, $11_2$ - $30_1$, $30_2$ - $31_1$, $31_2$) gebildet wird, die in einer selben Ebene angeordnet sind und mit dem anderen Kranz über Querstifte (12, 32) verbunden sind, die verklemmt eingebettet sind und aus einem selben Material wie die Sektoren gebildet sind.

2. Scheibenbremssystem nach Anspruch 1, dadurch gekennzeichnet, daß die beiden Scheiben (3, 4) entsprechend aus wenigstens zwei Kränzen (10, 11 bzw. 30, 31) gebildet sind, aus einem Reibmaterial, wobei jede aus wenigstens zwei Sektoren ($10_1$, $10_2$ - $11_1$, $11_2$ - $30_1$, $30_2$ - $31_1$, $31_2$) gebildet sind, die für jeden Kranz in einer selben Ebene liegen und von einem Kranz zum andern winkelig versetzt sind, wobei die Sektoren der beiden Kränze durch Querstifte (12, 32) einander zugeordnet sind, die eingeklemmt eingebettet sind und aus einem selben Material wie die Sektoren gebildet sind, und wobei Winkelverbindungseinrichtungen zwischen den Scheiben und entweder der Welle oder einem Bereich der Struktur vorgesehen sind.

3. Bremsscheibensystem nach Anspruch 1 oder 2, dadurch gekennzeichnet, daß die Winkelverbindungseinrichtungen aus Zähnen (15, 16, 36 und 41) bestehen, die auf wenigstens einem der Umfangsränder vorgesehen sind und mit Nuten (19, 38 und 42) entweder der Welle oder eines Bereichs der Struktur zusammenwirken.

4. Bremsscheibensystem nach Anspruch 1 oder 2, dadurch gekennzeichnet, daß wenigstens die Rotorscheibe (3) eine Seele (60) aufweist, die winkelmäßig mit der drehenden Welle verbunden ist und auf jeder ihrer Seiten mit einem Kranz (10, 11) aus Reibmaterial versehen ist.

5. Bremsscheibensystem nach einem der Ansprüche 1, 2 oder 4, dadurch gekennzeichnet, daß wenigstens die Rotorscheibe (3) zwei radiale Entlüftungskanäle (21, 22) aufweist.

6. Bremsscheibensystem nach Anspruch 5, dadurch gekennzeichnet, daß die radialen Lüftungskanäle (22) durch Seiten gegenüberliegend den Sektoren der Kränze begrenzt sind.

7. Bremsscheibensystem nach Anspruch 5, dadurch gekennzeichnet, daß die radialen Lüftungskanäle (21) in der Seele ausgebildet sind.

8. Bremsscheibensystem nach Anspruch 1 oder 2, dadurch gekennzeichnet, daß die Statorscheibe (4) auf einem Träger (5) angebracht ist, der axial gleitbeweglich bezüglich der Drehwelle (1) angeordnet ist und mit einer Vorrichtung (6) zur Aufnahme der Kupplung und der Steuerung der geradlinigen Bewegung in Richtung der Rotorscheibe zugeordnet ist.

9. Bremsscheibensystem nach Anspruch 8, dadurch gekennzeichnet, daß der Träger (5) von der Struktur (2) getragen wird.

10. Bremsscheibensystem nach Anspruch 8, dadurch gekennzeichnet, daß der Träger (5) winkelmäßig mit und axial gleitbeweglich auf einem gerillten Ring (56) angebracht ist, der mittels Wälzlager (57) durch einen auf der Welle aufgebrachten Ring (58, 80, 86) getragen wird.

11. Bremsscheibensystem nach Anspruch 10, dadurch gekennzeichnet, daß der Träger (5) gleitbeweglich auf dem Ring (56) unter Zwischenschaltung von Keilen (70) angebracht ist, die axiale Passagen (71) begrenzen.

12. Bremsscheibensystem nach Anspruch 1, dadurch gekennzeichnet, daß die Rotorscheibe (3) auf einer Platte (85) angebracht ist, die mit der Welle (1) drehverbunden ist.

13. Bremsscheibensystem nach Anspruch 12, dadurch gekennzeichnet, daß die Platte (85) durch einen Radkörper (92) gebildet wird, der durch die Welle in Drehung versetzt wird.

14. Bremsscheibensystem nach Anspruch 12, dadurch gekennzeichnet, daß die Platte (85) durch einen Keil (86) gebildet wird, der auf der Welle angebracht ist.

Fig. 1

Fig. 2

Fig. 3

Fig. 4

Fig.5

Fig.6

Fig.7